(19) Europäisches Patentamt
European Patent Office
Office européen des brevets

(11) **EP 2 551 587 A2**

(12) **DEMANDE DE BREVET EUROPEEN**

(43) Date de publication:
**30.01.2013 Bulletin 2013/05**

(51) Int Cl.:
**F23C 10/00** (2006.01)       **F23C 99/00** (2006.01)
**C10J 3/72** (2006.01)       **C01B 3/44** (2006.01)

(21) Numéro de dépôt: **12290235.6**

(22) Date de dépôt: **17.07.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **28.07.2011 FR 1102374**

(71) Demandeurs:
• **IFP Energies Nouvelles**
  **92852 Rueil Malmaison Cedex (FR)**
• **Total S.A.**
  **92400 Courbevoie (FR)**

(72) Inventeurs:
• **Rifflart, Sébastien**
  **75012 Paris (FR)**
• **Stainton, Hélène**
  **69002 Lyon (FR)**
• **Perreault, Patrice**
  **Montreal**
  **Quebec H2H 2E7 (CA)**
• **Patience, Grégory**
  **Town of Mount Royal**
  **Quebec H3P 1N8 (CA)**

(54) **Procédé de combustion en boucle chimique utilisant la pyrolusite comme masse oxydo-reductrice**

(57) L'invention concerne un procédé de combustion d'hydrocarbures solides, liquides ou gazeux par oxydo-réduction en boucle chimique utilisant comme masse active initiale un minerai naturel de manganèse communément appelé pyrolusite, comprenant initialement au moins 60% massique de $MnO_2$, sous forme de particules. La masse active est activée par une montée progressive en température sous atmosphère oxydante jusqu'à une température supérieure ou égale à 600°C.

De manière avantageuse, l'invention s'applique dans le domaine de la captation du $CO_2$.

FIG. 8

EP 2 551 587 A2

**Description**

**DOMAINE DE L'INVENTION**

L'invention concerne un procédé de combustion d'hydrocarbures solides, liquides ou gazeux par oxydo-réduction en boucle chimique utilisant comme masse active initiale un minerai naturel de manganèse communément appelé pyrolusite.

**Terminologie**

Procédé de Chemical Looping Combustion ou CLC : Dans la suite du texte, on entend par procédé CLC (Chemical Looping Combustion) un procédé d'oxydo-réduction en boucle sur masse active. Il convient de noter que, de manière générale, les termes oxydation et réduction sont utilisés en relation avec l'état respectivement oxydé ou réduit de la masse active. Le réacteur d'oxydation est celui dans lequel la masse oxydo-réductrice est oxydée et le réacteur de réduction est le réacteur dans lequel la masse oxydo-réductrice est réduite.

**ART ANTÉRIEUR**

Dans un contexte de demande énergétique mondiale croissante, la capture du dioxyde de carbone en vue de sa séquestration est devenue une nécessité incontournable afin de limiter l'émission de gaz à effet de serre préjudiciable à l'environnement. Le procédé d'oxydo-réduction en boucle sur masse active, ou Chemical Looping Combustion (CLC) dans la terminologie anglo-saxonne, permet de produire de l'énergie à partir de combustibles hydrocarbonés tout en facilitant la capture du dioxyde de carbone émis lors de la combustion.

Le procédé CLC consiste à mettre en oeuvre des réactions d'oxydo-réduction d'une masse active pour décomposer la réaction de combustion en deux réactions successives. Une première réaction d'oxydation de la masse active, avec de l'air ou un gaz jouant le rôle de comburant, permet d'oxyder la masse active.

Une seconde réaction de réduction de la masse active ainsi oxydée à l'aide d'un gaz réducteur permet ensuite d'obtenir une masse active réutilisable ainsi qu'un mélange gazeux comprenant essentiellement du dioxyde de carbone et de l'eau, voire du gaz de synthèse contenant de l'hydrogène et du monoxyde d'azote. Cette technique permet donc d'isoler le dioxyde de carbone ou le gaz de synthèse dans un mélange gazeux pratiquement dépourvu d'oxygène et d'azote.

La combustion étant globalement exothermique, il est possible de produire de l'énergie à partir de ce procédé, sous la forme de vapeur ou d'électricité, en disposant des surfaces d'échange dans la boucle de circulation de la masse active ou sur les effluents gazeux en aval des réactions de combustion ou d'oxydation.

Le brevet US 5 447 024 décrit un procédé de combustion en boucle chimique comprenant un premier réacteur de réduction d'une masse active à l'aide d'un gaz réducteur et un second réacteur d'oxydation permettant de restaurer la masse active dans son état oxydé par une réaction d'oxydation avec de l'air humide. La technologie du lit fluidisé circulant est utilisée pour permettre le passage continu de la masse active de son état oxydé à son état réduit.

La masse active, passant alternativement de sa forme oxydée à sa forme réduite et inversement, décrit un cycle d'oxydo-réduction.

Ainsi, dans le réacteur de réduction, la masse active ($M_xO_y$) est tout d'abord réduite à l'état $M_xO_{y-2n-m/2}$, par l'intermédiaire d'un hydrocarbure $C_nH_m$, qui est corrélativement oxydé en $CO_2$ et $H_2O$, selon la réaction (1), ou éventuellement en mélange $CO + H_2$ selon les proportions utilisées.

$$(1)\ C_nH_m + M_xO_y \rightarrow n\ CO_2 + m/2\ H_2O + M_xO_{y-2n-m/2}$$

Dans le réacteur d'oxydation, la masse active est restaurée à son état oxydé ($M_xO_y$) au contact de l'air selon la réaction (2), avant de retourner vers le premier réacteur.

$$(2)\ M_xO_{y-2n-m/2} + (n+m/4)\ O_2 \rightarrow M_xO_y$$

Dans les équations ci-dessus, M représente un métal, dans notre cas, le Manganèse.

L'efficacité du procédé de combustion en boucle chimique (CLC) en lit fluidisé circulant repose dans une large mesure sur les propriétés physico-chimiques de la masse active d'oxydo-réduction.

La réactivité du ou des couples oxydo-réducteurs mis en jeu ainsi que la capacité de transfert d'oxygène associée sont des paramètres qui influent sur le dimensionnement des réacteurs et sur les vitesses de circulation des particules.

La durée de vie des particules quant à elle dépend de la résistance mécanique des particules ainsi que de leur stabilité chimique.

Afin d'obtenir des particules utilisables pour ce procédé, les particules mises en jeu sont généralement composées d'un couple ou d'un ensemble de couples oxydo-réducteur choisi parmi CuO/Cu, $Cu_2O/Cu$, NiO/Ni, $Fe_2O_3/Fe_3O_4$, FeO/Fe, $Fe_3O_4/FeO$, $MnO_2/Mn_2O_3$, $Mn_2O_3/Mn_3O_4$, $Mn_3O_4/MnO$, MnO/Mn, $Co_3O_4/CoO$, CoO/Co, et d'un liant apportant la stabilité physico-chimique nécessaire.

Le couple NiO/Ni est souvent cité comme masse active de référence pour le procédé CLC pour ses capacités de transport d'oxygène et sa cinétique rapide de réduction, notamment en présence de méthane. Comme l'oxyde de nickel n'existe pas à l'état naturel de façon suffisamment concentrée pour pouvoir obtenir des propriétés intéressante pour le procédé CLC, il est donc généralement utilisé de façon concentrée dans des particules de masse active synthétiques.

L'utilisation de nickel pose cependant quelques problème car l'oxyde de nickel est suspecté d'être cancérigène ce qui entraîne des contraintes importantes sur le système de filtration des fumées. Il perd en outre ses capacités réactives en présence de composés soufrés, ce qui ne permet pas de l'envisager pour l'utilisation de combustibles, comme le charbon, qui en contiennent.

D'une façon plus générale, la problématique principale posée par l'utilisation de particules synthétiques est leur coût de fabrication élevé. Le procédé nécessitant la circulation du solide dans des réacteurs où les vitesses de gaz sont relativement élevées, on ne peut empêcher une consommation continue de solide par attrition. Si le coût de masse active est relativement élevé, alors le poste d'appoint en masse active peut devenir une part importante du coût opératoire. Il est donc important de trouver une masse active à faible coût afin de diminuer l'impact du coût des particules sur le prix de captage du $CO_2$ par CLC. A ce titre, la possibilité d'utiliser un minerai naturel d'ilménite ($FeTiO_3$) a été démontrée par l'Instituto de Catalisis y Petroleoquimica (CSIC), Madrid ("Titania-supported iron oxide as oxygen carrier for chemical-looping combustion of methane, Corbella, Beatriz M.; Palacios, Jose Maria, Fuel (2006), Volume Date 2007, 86(1-2), 113-122). Cependant, ce minerai n'a qu'une capacité de transport d'oxygène très réduite et de plus une très faible réactivité.

Dans la demande de brevet GB 2 058 828, divers oxydes métalliques, dont un minerai naturel de manganèse, sont utilisés en tant que sources d'oxygène pour gazéifier des espèces carbonées. Le minerai de manganèse est calciné en dehors de l'installation de gazéification, préalablement à son utilisation pour la gazéification.

Des minerais naturels de manganèse ont également été testés en tant que transporteurs d'oxygène dans des procédés CLC par Fossdal et al. ("Study of inexpensive oxygen carriers for chemical looping combustion", A. Fossdal et al., International Journal of Greenhouse Gas control 5, 2011, pp. 483-488). Lors de ces tests, le minerai est d'abord calciné pendant une longue période sous air, puis placé sous atmosphère réductrice pendant une période de même durée, et enfin oxydé selon une étape similaire à celle de la calcination initiale. Le minerai subit ensuite des cycles d'oxydo-réduction sous $CH_4$ ou $H_2$.

Nous avons mis à jour que certains minerais naturels de manganèse communément appelés pyrolusite et usuellement utilisés pour la production métallurgique, peuvent, après une phase d'activation, être utilisés dans un procédé de combustion en boucle redox permettant notamment la séquestration du $CO_2$.

L'invention consiste à utiliser des minerais naturels de manganèse contenant principalement du $MnO_2$ à l'origine, avantageusement broyés à une taille de particules permettant d'obtenir des propriétés d'écoulement et de transport facilitées, à activer ces particules par une montée en température sous atmosphère oxydante, et à utiliser ces particules dans une installation de combustion en boucle chimique comprenant une zone de réduction dans laquelle le combustible est oxydé par l'oxygène fourni par réduction des particules de minerai, et une zone d'oxydation de ces mêmes particules en présence d'air, les particules circulant en continu entre ces deux zones de réduction et d'oxydation.

Le procédé permet d'effectuer la combustion du combustible et notamment de produire des fumées concentrées en $CO_2$ exemptes d'azote facilitant la séquestration du $CO_2$. Le minerai utilisé selon l'invention (masse active), lorsqu'il est activé comme décrit dans la suite de la description, est particulièrement intéressant, car il possède une grande capacité de transport d'oxygène, des propriétés cinétiques permettant des réactions rapides et n'est pas sensible au soufre que pourrait contenir le combustible.

## OBJETS DE L'INVENTION

L'invention concerne de manière générale l'utilisation d'un minerai naturel de manganèse communément appelé pyrolusite comme masse active pour la combustion d'hydrocarbures solides, liquides ou gazeux en boucle chimique (CLC).

L'invention concerne également un procédé de combustion par oxydo-réduction en boucle chimique utilisant cette masse active et permettant une séparation aisée des oxydes de soufre. Le procédé comprend notamment une étape d'activation de cette masse active au moyen d'une phase de montée progressive en température, sous atmosphère oxydante.

## DESCRIPTION DE L'INVENTION

L'invention consiste à prendre un minerai naturel de manganèse communément appelé pyrolusite contenant majoritairement du $MnO_2$, à le broyer et à le tamiser si nécessaire afin d'obtenir une granulométrie compatible avec une utilisation en lit fluidisé, à l'activer par une phase de montée progressive en température sous atmosphère oxydante et à l'utiliser ensuite dans un procédé d'oxydo-réduction en boucle sur masse active de type Chemical Looping.

### Résumé de l'invention

L'invention concerne un procédé de combustion d'hydrocarbures solides, liquides ou gazeux par oxydo-réduction en boucle chimique utilisant comme masse active d'oxydo-réduction un minerai naturel de manganèse de type pyrolusite comprenant initialement au moins 60% massique de $MnO_2$, sous forme de particules, dans lequel la masse active est activée par une montée progressive en température sous atmosphère oxydante jusqu'à une température supérieure ou égale à 600°C.

Avantageusement, la montée progressive en température sous atmosphère oxydante est réalisée à une vitesse comprise entre 5°C/h et 100°C/h, et plus préférentiellement à une vitesse comprise entre 10°C/h et 50°C/h.

De manière préférée, la masse active est activée dans l'installation de combustion en boucle chimique.

De manière préférée, la teneur initiale en $MnO_2$ du minerai est comprise entre 70 et 90% massique.

De manière encore plus préférée, la teneur initiale en $MnO_2$ du minerai est comprise entre 76 et 82% massique.

De manière avantageuse, les particules de masse active sont des fines produites lors de l'extraction et de la production de minerai de qualité métallurgique.

Le minerai peut être préalablement broyé et tamisé afin d'obtenir une masse active de granulométrie compatible avec une mise en oeuvre en lit fluidisé.

De manière préférée, la masse active a une granulométrie telle que plus de 90% des particules de masse active ont une taille comprise entre 100 et 500 $\mu$m.

De manière très préférée, la masse active a une granulométrie telle que plus de 90% des particules de masse active ont une taille comprise entre 150 et 300 $\mu$m.

De manière encore plus préférée, la masse active a une granulométrie telle que plus de 95% des particules de masse active ont une taille comprise entre 150 et 300 $\mu$m.

La masse active d'oxydo-réduction peut être activée par une montée progressive en température jusqu'à une température supérieure ou égale à 800°C, et de manière préférée supérieure ou égale à 900°C.

Le débit de circulation de la masse active mesuré à l'entrée de la zone de réduction de la boucle chimique est généralement compris entre 30 et 100 kg/h par kg/h d'oxygène consommé dans la zone de réduction.

La température de la zone de réduction est avantageusement comprise entre 600 et 1400°C.

Dans un mode de réalisation préféré, la réduction est opérée en présence de vapeur d'eau.

La combustion peut être totale. Le procédé peut alors être utilisé pour la captation du CO2.

La combustion peut être partielle. Le procédé peut alors être utilisé pour la production de gaz de synthèse (CO + H2).

De manière plus générale, l'invention concerne l'utilisation d'un minerai naturel de manganèse de type pyrolusite comprenant au moins 60% massique de $MnO_2$ comme masse active d'oxydo-réduction pour la combustion en boucle chimique d'hydrocarbures solides, liquides ou gazeux.

### Description détaillée de l'invention

L'invention concerne un procédé de combustion d'hydrocarbures solides, liquides ou gazeux par oxydo-réduction en boucle chimique utilisant une masse active de type pyrolusite comprenant initialement au moins 60% massique de $MnO_2$. Avantageusement la masse active est un minerai naturel de manganèse communément appelé pyrolusite, qui a été broyé et tamisé afin d'obtenir des particules de granulométrie compatible avec une utilisation en lit fluidisé.

De manière préférée, la teneur initiale en $MnO_2$ (avant introduction des particules dans la boucle chimique) est comprise entre 70 et 90% massique, et de manière très préférée entre 76 et 82% massique, qui correspond à la pyrolusite de qualité métallurgique disponible commercialement.

Cette masse active est activée par une phase une phase de montée progressive en température sous atmosphère oxydante.

*__Préparation et activation de masse active pour le procédé CLC selon l'invention__*

Le manganèse est présent naturellement sous forme de minerais. Plus de 300 minerais sont aujourd'hui connus pour contenir du manganèse, mais seule une trentaine sont exploités pour le manganèse qu'ils contiennent. Le tableau ci-dessous répertorie les plus couramment utilisés, leur formule chimique, ainsi que leur teneur moyenne en manganèse en %:

| Pyrolusite | $MnO_2$ | 63,2 |
|---|---|---|
| Braunite | $3(Mn,Fe)_2O_3.MnSiO_3$ | 48,9 - 56,1 |
| Braunite II | $7(Mn,Fe)_2O_3.CaSiO_3$ | 52,6 |
| Manganite | $yMnOOH$ | 62,5 |
| Psilomelane | $(K,Ba)(Mn^{2+}Mn^{4+})_8O_{16}(OH)_4$ | 48,6 - 49,6 |
| Cryptomelane | $(K,Ba)Mn_8O_{16}xH_2O$ | 55,8 - 56,8 |
| Hollandite | $(Ba,K)Mn_8O_{16}xH_2O$ | 42,5 |
| Todorokite | $(Ca,Na,K)(Mn^{2+}Mn^{4+})_6O_{12}xH_2O$ | 49,4 - 52,2 |
| Hausmannite | $(Mn,Fe)_3O_4$ | 64,8 |
| Jacobsite | $Fe_2MnO_4$ | 23,8 |
| Bixbyite | $(Mn,Fe)_2O_3$ | 55,6 |
| Rhodochrosite | $MnCO_3$ | 47,6 |

La pyrolusite est donc une variété naturelle de dioxyde de manganèse, $MnO_2$, aussi connue sous le nom oxyde de manganèse (IV). De manière générale, la concentration en $MnO_2$ de la pyrolusite naturelle extraite des mines de pyrolusite actuellement exploitées est supérieure ou égale à une concentration de l'ordre de 60% massique de $MnO_2$.

Plusieurs qualités commerciales de $MnO_2$ naturel sont disponibles :

- pyrolusite (minerai et concentré) de qualité métallurgique ($MnO_2$ 76 à 82 %);
- $MnO_2$ de qualité chimique ($MnO_2$ 82 à 85 %) ;
- $MnO_2$ à haute pureté (93%) pour la fabrication de piles standards.

Selon l'invention, la pyrolusite peut être utilisée comme masse active pour le procédé de combustion en boucle chimique. Afin d'obtenir des propriétés de réactivité et de capacité de transport d'oxygène suffisante pour le procédé, celle-ci doit comprendre initialement au moins 60% massique de $MnO_2$. De manière préférée, la teneur initiale en $MnO_2$ est comprise entre 70 et 90% massique, et de manière très préférée entre 76 et 82% massique.

Le processus d'extraction du minerai naturel comporte généralement une étape de concassage. De façon avantageuse, les fines produites lors de ce concassage initial peuvent être utilisées pour l'application visée par l'invention. Ces fines ont généralement une granulométrie inférieure ou égale à 10 mm.

Pour permettre une utilisation optimale dans le procédé CLC, le minerai est avantageusement broyé et tamisé afin d'obtenir une granulométrie compatible avec sa mise en oeuvre en lit fluidisé.

La granulométrie de mise en oeuvre de la masse active dans le procédé de combustion en boucle chimique est en effet importante pour le bon fonctionnement du procédé. De ce fait, il est préférable de diviser le minerai en fines particules. Cette opération peut être effectuée par exemple par broyage du minerai en utilisant les technologies de broyage de minerai bien connues de l'homme du métier. Dans le procédé de combustion en boucle chimique, il est nécessaire de contrôler la circulation de solide entre les différentes enceintes d'oxydation et de réduction, pour maitriser l'apport d'oxygène par le minerai et le gradient de température entre les différentes enceintes. L'utilisation de vannes non mécaniques telles que les vannes en L, dont le principe est décrit dans le brevet FR 2 948 177 permet de contrôler efficacement la circulation à haute température en minimisant la présence d'internes dans l'écoulement. L'utilisation de ces vannes non mécaniques est préférable avec des particules relativement grosses, afin d'obtenir dans les vannes en L un domaine de vitesses de glissement entre gaz et particules suffisamment grand permettant de contrôler la circulation dans un domaine relativement large. De plus, dans le procédé en boucle chimique avec des charges solides, il est nécessaire de séparer dans le réacteur de réduction les particules imbrûlées des oxydes métalliques.

Il est donc avantageux de limiter la teneur en fines particules d'oxydes métallique de diamètre inférieur à 100 microns dans l'installation pour avoir un fonctionnement optimal des vannes non métalliques contrôlant la circulation, mais également pour limiter l'entraînement d'oxyde métallique avec le charbon imbrûlé dans les effluents gazeux du réacteur après séparation.

Les grosses particules sont plus difficiles à transporter et nécessitent des vitesses de transport importantes. Pour limiter les vitesses de transport dans les lignes de transfert et à l'intérieur des réacteurs, et donc limiter les pertes de charges dans le procédé ainsi que les phénomènes d'abrasion et d'érosion, il est donc préférable de limiter la taille des particules à une valeur maximum voisine de 500 microns.

De manière préférée, le minerai introduit dans l'installation de combustion en boucle chimique a donc une granulométrie telle que plus de 90% des particules ont une taille comprise entre 100 et 500 microns.

De manière plus préférée, le minerai introduit dans l'installation a une granulométrie telle que plus de 90% des particules ont un diamètre de particules compris entre 150 et 300 microns.

De manière encore plus préférée, le minerai introduit dans l'installation a une granulométrie telle que plus de 95% des particules ont un diamètre compris entre 150 et 300 microns.

Afin de pouvoir augmenter les capacités réactives de la masse active, et selon l'invention, le solide subit, de manière avantageuse après broyage et tamisage, une phase d'activation comprenant une montée progressive en température sous atmosphère oxydante, constituée par exemple par de l'air. La température atteinte est généralement supérieure ou égale à 535°C, avantageusement supérieure ou égale à 600°C, de manière préférée supérieure ou égale à 800°C, et de manière très préférée supérieure ou égalé à 900°C.

La phase d'activation est de préférence réalisé dans l'installation de combustion en boucle chimique.

Après une éventuelle étape de broyage et tamisage réalisée ex-situ, c'est-à-dire en dehors de l'installation de combustion en boucle chimique, le solide non activé (minerai brut) est introduit dans une zone de l'installation contenant un excès d'oxygène, à savoir le réacteur d'oxydation, pour son activation. L'installation de combustion en boucle chimique comprend une zone réactionnelle d'oxydation dans laquelle la masse active est oxydée, et une zone réactionnelle de réduction dans laquelle la masse active est réduite. Au moment du démarrage, avant que soient initiés les cycles d'oxydo-réduction par introduction de combustible dans le procédé, le solide non activé à température ambiante est introduit au bas de la zone d'oxydation, qui est avantageusement à une température comprise entre 400°C et 550°C sous atmosphère oxydante, par exemple de l'air. Cette gamme de température préférentielle de la zone d'oxydation au moment de l'introduction du minerai dans l'installation permet par exemple de minimiser l'air à introduire dans le procédé. Le minerai s'équilibre alors thermiquement avec l'atmosphère oxydante dans la zone d'oxydation où il est introduit, de manière quasi-instantanée. La durée de chargement du solide froid dans la zone d'oxydation est par exemple comprise entre 12h et 72h, selon le débit du solide introduit et les dimensions de l'installation. Le minerai subit ensuite une rampe de montée en température sous cette atmosphère oxydante jusqu'à une température généralement supérieure ou égale à 535°C, avantageusement supérieure ou égale à 600°C, de manière préférée supérieure ou égale à 800°C, et de manière très préférée supérieure ou égale à 900°C. Lors de l'activation de la masse active, la montée en température sous atmosphère oxydante se fait de façon progressive, de préférence à une vitesse comprise entre 5°C/h et 100°C/h, plus préférentiellement à une vitesse comprise entre 10°C/h et 50°C/h. La montée en température du réacteur d'oxydation peut se faire par introduction d'air chaud, éventuellement par l'utilisation de brûleurs à gaz, ou par une combinaison des deux. La montée en température de l'installation par augmentation de la température de l'air de préchauffage, par mise en route de brûleurs à gaz, ou par un combinaison des deux, permet la mise en circulation du solide entre la zone réactionnelle de réduction et celle d'oxydation. Pendant cette phase de démarrage et d'activation du solide, la concentration en oxygène dans la zone d'oxydation est de préférence au minimum de 5% d'excès d'$O_2$. Une fois la masse activée, on peut initier les cycles d'oxydo-réduction par l'introduction du combustible dans la zone de réduction.

De manière préférée, la réaction de combustion (réduction de la masse active) est opérée en présence de vapeur d'eau. Dans le cas d'utilisation de charges solides ou liquides, l'injection de vapeur d'eau est inhérente au procédé. En effet pour favoriser le contact entre une charge liquide et l'oxyde métallique, il est préférable d'atomiser la charge liquide et cela peut s'effectuer efficacement dans des atomiseurs diphasiques en présence de vapeur d'eau. Par ailleurs, la vapeur d'eau favorise la gazéification des hydrocarbures, et il est préférable dans le cas de charges liquides ou solides de maintenir dans le réacteur de réduction une pression élevée en vapeur d'eau favorisant les réactions de gazéification. Dans le cas de charge gazeuse, il est avantageux d'injecter de la vapeur d'eau avec le gaz de fluidisation afin d'éviter la formation d'agglomérats du solide porteur d'oxygène.

### *Procédé de combustion d'hydrocarbures en boucle chimique en lit fluidisé*

Les masses actives selon l'invention jouent le rôle de transporteur d'oxygène pour le procédé de combustion en boucle d'oxydo-réduction et peuvent être mises en oeuvre pour traiter des combustibles gazeux (ex. : gaz naturel, syngas), liquides (ex. : fuel, bitume...), ou solides (ex. : charbon) en lit fluidisé circulant.

L'installation de combustion en boucle chimique d'oxydo-réduction comprend une zone réactionnelle d'oxydation et une zone réactionnelle de réduction. Le solide est oxydé dans une zone d'oxydation comprenant au moins un lit fluidisé à une température généralement comprise entre 600 et 1400°C, préférentiellement entre 800 et 1000°C. Il est ensuite transféré dans une zone de réduction comprenant au moins un réacteur en lit fluidisé où il est mis en contact avec le combustible à une température généralement comprise entre 600 et 1400°C, préférentiellement entre 800 et 1000°C. Le temps de contact varie typiquement entre 10 secondes et 10 minutes, de préférence entre 1 et 5 minutes. Le ratio entre la quantité de masse active en circulation et la quantité d'oxygène à transférer entre les deux zones réactionnelles est avantageusement compris entre 30 et 100.

La combustion peut être partielle ou totale.

Dans le cas de la combustion partielle, le ratio masse active/combustible est ajusté de manière à réaliser l'oxydation partielle du combustible, produisant un gaz de synthèse sous forme d'un mélange riche en CO + $H_2$.

Le procédé peut donc être utilisé pour la production de gaz de synthèse. Ce gaz de synthèse peut être utilisé comme charge d'autres procédés de transformation chimique, par exemple le procédé Fischer Tropsch permettant de produire à partir de gaz de synthèse des hydrocarbures liquides à chaînes hydrocarbonées longues utilisables ensuite comme bases carburants.

Dans le cas où le gaz de fluidisation utilisé est la vapeur d'eau ou un mélange de vapeur d'eau et d'autre(s) gaz, la réaction du gaz CO à l'eau (ou water gas shift en termes anglo-saxons, $CO + H_2O \Rightarrow CO_2 + H_2$) peut également avoir lieu, aboutissant à la production d'un mélange $CO_2 + H_2$ en sortie de réacteur.

Dans ce cas, le gaz de combustion peut être utilisé à des fins de production d'énergie compte tenu de son pouvoir calorifique.

On peut également envisager d'utiliser ce gaz pour la production d'hydrogène, pour par exemple alimenter des unités d'hydrogénation, d'hydrotraitement en raffinage ou un réseau de distribution d'hydrogène (après réaction de water gaz shift).

Dans le cas de la combustion totale, le flux de gaz en sortie du réacteur de réduction est composé essentiellement de $CO_2$ et de vapeur d'eau. Un flux de $CO_2$ prêt à être séquestré est ensuite obtenu par condensation de la vapeur d'eau. La production d'énergie est intégrée au procédé Chemical Looping Combustion par échange de chaleur dans la zone réactionnelle et sur les fumées qui sont refroidies.

L'invention concerne donc également un procédé de captation du $CO_2$ par combustion totale en boucle chimique dans un procédé selon l'invention.

Dans le cas de l'utilisation de combustibles soufrés, les oxydes de soufre qui pourraient être produits lors de la combustion totale de combustibles contenant du soufre peuvent être séparés du flux de $CO_2$ concentré par un procédé classique tel qu'une absorption sur solvant ou par l'ajout d'un réactif de désulfuration (chaux ou calcaire). L'utilisation selon l'invention de la masse active à base de pyrolusite permet de ne pas rejeter d'oxyde de soufre dans le flux sortant du réacteur d'oxydation, limitant ainsi avantageusement le flux à traiter. De manière avantageuse, les oxydes de soufre produits par le procédé lors de l'utilisation de combustibles soufrés sont ainsi récupérés uniquement sur le flux sortant du réacteur de réduction (réacteur "fuel").

En fonction de l'utilisation des gaz de combustion, la pression du procédé est ajustée. Ainsi, pour effectuer une combustion totale, il est intéressant de travailler à pression faible pour minimiser le coût énergétique de compression des gaz et maximiser ainsi le rendement énergétique de l'installation. Pour produire du gaz de synthèse, on peut avantageusement dans certains cas travailler en pression, afin d'éviter la compression du gaz de synthèse en amont du procédé de synthèse aval : le procédé Fischer Tropsch travaillant par exemple à des pressions comprises entre 20 et 40 bar, il peut être intéressant de produire le gaz à une pression plus élevée.

## Description des figures

Les figures 1 à 8 illustrent l'invention sans en limiter la portée.

**Figure 1 :** La figure 1 représente l'évolution en fonction du temps des concentrations des gaz mesurés ($CH_4$, CO, $CO_2$, $H_2$, $H_2O$) à la sortie du micro-réacteur lors de la première réduction au $CH_4$ dans le cas de l'utilisation d'un échantillon de pyrolusite non activé (exemple 1).

**Figure 2 :** La figure 2 représente l'évolution en fonction du temps des concentrations des gaz mesurés ($CH_4$, CO, $CO_2$, $H_2$, $H_2O$) à la sortie du micro-réacteur lors de la première réduction au $CH_4$ dans le cas de l'utilisation d'un échantillon de pyrolusite activé (exemple 1).

**Figure 3** : La figure 3 représente l'évolution en fonction du temps des concentrations des gaz mesurés ($CH_4$, CO, $CO_2$, $H_2$, $H_2O$) à la sortie du micro-réacteur lors de la cinquième réduction au $CH_4$ dans le cas de l'utilisation d'un échantillon de pyrolusite non activé (exemple 1).

Figure 4 : La figure 4 représente l'évolution en fonction du temps des concentrations des gaz mesurés (CH4, CO, $CO_2$, $H_2$, $H_2O$) à la sortie du micro-réacteur lors de la cinquième réduction au $CH_4$ dans le cas de l'utilisation d'un échantillon de pyrolusite activé (exemple 1).

**Figure 5** : La figure 5 représente le calcul de la quantité d'oxygène transféré $R_0$ lors de chaque cycle pour un échantillon activé ("activated") et un échantillon non activé ("non activated") (exemple 1). N désigne le nombre de réductions effectuées.

**Figure 6 :** La figure 6 représente l'évolution en fonction du temps des concentrations des gaz secs (CO, $CO_2$, $H_2$) mesurés à la sortie du réacteur lors de la réduction d'un échantillon de pyrolusite non activé par des injections successives de charbon (exemple 2).

**Figure 7 :** La figure 7 représente l'évolution en fonction du temps des concentrations des gaz secs (CO, $CO_2$, $H_2$) mesurés à la sortie du réacteur lors de la réduction d'un échantillon de pyrolusite activé par des injections successives de charbon (exemple 2).

**Figure 8 :** La figure 8 représente le calcul de la conversion normalisée du carbone (C en %) lors d'une injection de charbon dans un lit de masse active de type pyrolusite (selon l'invention) ou de masse active $NiO/NiAl_2O_4$ (comparatif) préalablement oxydé (exemple 3).

**Exemples**

Les exemples ci-dessous illustrent l'invention à titre non limitatif.

*Exemple 1 : Effet de l'activation sur un échantillon de pyrolusite subissant des cycles de réduction par du méthane.*

Deux essais sont réalisés dans un micro-réacteur en lit fixe subissant des cycles consécutifs d'oxydation en présence d'un gaz oxydant (Ar : 79%, $O_2$ : 21%) puis de réduction avec un gaz réducteur (Ar : 90%, $CH_4$ : 10%) entre-coupés de purge avec un gaz neutre (Ar).
Chacun des essais est réalisé avec de la pyrolusite préalablement broyée et tamisée à la granulométrie 100-200 microns et de composition :

|  | Mn | $MnO_2$ | $SiO_2$ | $Al_2O_3$ | Fe | P | $K_2O$ | Ni+Co | Cu | Mn/P |
|---|---|---|---|---|---|---|---|---|---|---|
| % (poids) | 52,3 | 78,60 | 1,73 | 5,09 | 2,78 | 0,109 | 0,64 |  |  |  |
| Technique utilisée | Pot | T | FX | FX | FX | FX | FX | FX | FX |  |

où Pot : Potentiomètre

FX : Spectrophotomètre à fluorescence X
T : Titrimètre
Pour chacun des deux essais on place 1,0 g de solide dans le micro réacteur à froid puis :

- dans le cas 1 : l'échantillon subit une rampe de température jusqu'à une température de 800°C, à raison de 10°C/min, sous atmosphère inerte (100% Ar) puis un isotherme de 30 min sous atmosphère oxydante (21% $O_2$ + 79% Ar).
- Dans le cas 2, l'échantillon subit la même rampe de température jusqu'à une température de 800°C, à raison de 10°C/min, mais sous atmosphère oxydante cette fois-ci (21% $O_2$ + 79% Ar), puis également un isotherme de 30 min sous atmosphère oxydante (21% $O_2$ + 79% Ar).

Ensuite, dans les deux cas, chacun des échantillons va subir 9 cycles se déroulant comme suit :

- 10 min sous gaz réducteur (10% $CH_4$ + 90% Ar)
- 5 min sous balayage de gaz inerte (100% Ar)
- 10 min sous gaz oxydant (21% $O_2$ + 79% Ar)
- 5 min sous balayage de gaz inerte (100% Ar)

Le débit de gaz traversant le réacteur est contrôlé dans tous les cas à 50 ml/min (pour les deux essais).

Les gaz à la sortie sont analysés par un spectromètre de masse.

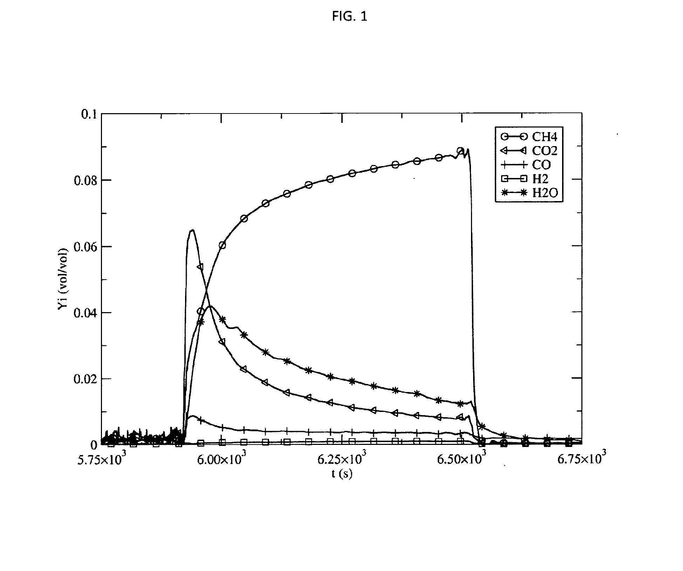

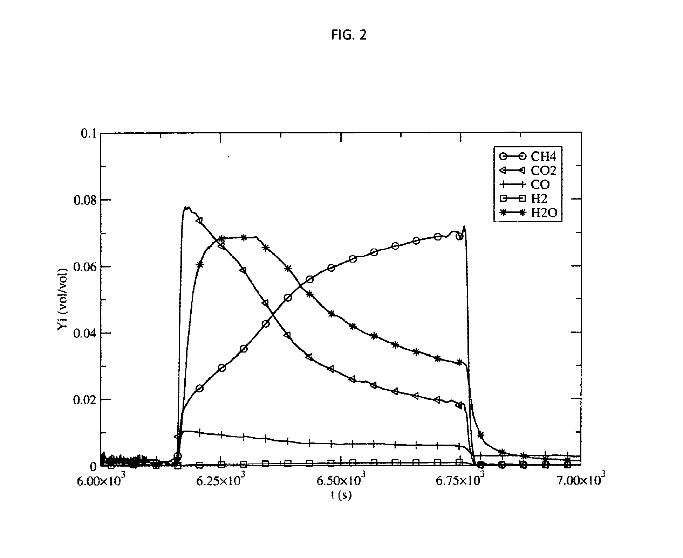

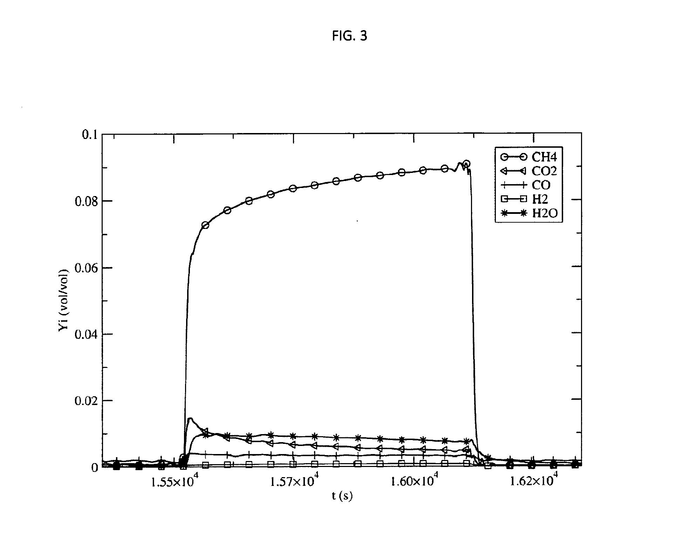

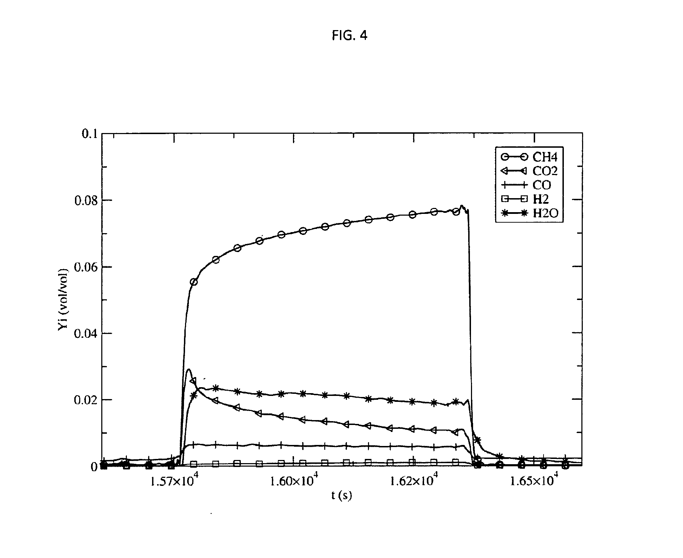

Les figures 1 et 3 représentent l'analyse des gaz de sortie lors la phase réductrice du premier et du cinquième cycle pour le cas 1, alors que les figures 2 et 4 représentent l'analyse des gaz de sortie lors la phase réductrice du premier et du cinquième cycle pour le cas 2.

On constate assez facilement que la production de $CO_2$ et $H_2O$ par combustion de la charge gazeuse à base de $CH_4$ est bien plus importante dans le cas de l'échantillon qui a été activé par une rampe sous atmosphère oxydante (cas 2) que dans le cas où l'échantillon a subi une rampe sous atmosphère inerte. Pourtant, les deux échantillons ont tous les deux subi une phase isotherme à 800°C de 30 min sous atmosphère oxydante avant de lancer les cycles d'oxydo-réduction. On peut donc en déduire que la phase d'activation a lieu lors de la montée en température.

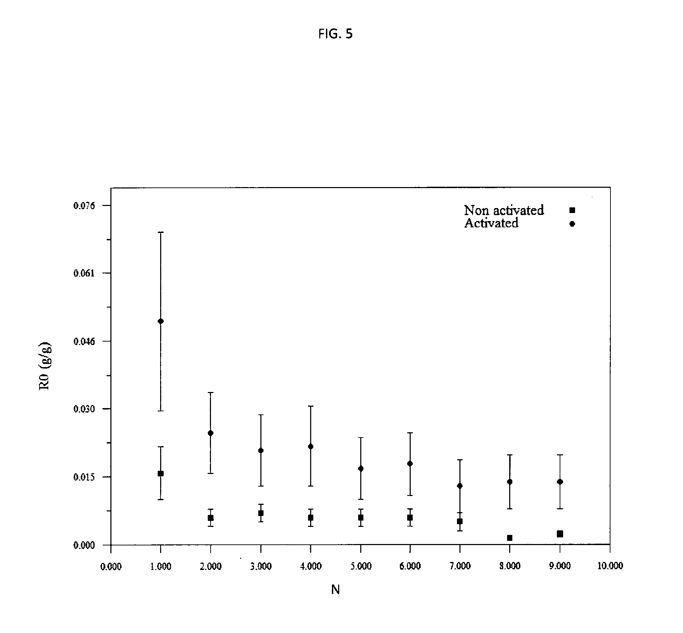

La figure 5 représente le calcul de la quantité d'oxygène transféré lors de chaque cycle pour les deux cas. Cette quantité est calculée par intégration des quantités de $CO_2$, $H_2O$ et CO produites lors de la phase de réduction. Les barres d'erreur sont calculées par bilan de masse par rapport à l'intégration de la consommation d'$O_2$ lors de la phase d'oxydation. On constate que la quantité d'oxygène transférée est en moyenne trois fois plus importante dans le cas de l'échantillon qui a été activé par une rampe sous atmosphère oxydante (cas 2) que dans le cas où l'échantillon a subi une rampe sous atmosphère inerte.

### *Exemple 2 : Effet de l'activation sur un échantillon de pyrolusite subissant une réduction par du charbon.*

Dans cet exemple, les essais sont réalisés dans un réacteur en lit fluidisé contenant 200g de masse de pyrolusite de même composition que dans l'exemple 1 et préalablement broyée et tamisée à la granulométrie 150-300 microns.

Comme dans l'exemple 1, deux essais seront réalisés :

- Essai 1 : l'échantillon va subir une rampe de température jusque 940°C, à raison de 10°C/min, sous atmosphère inerte (100% $N_2$) puis un isotherme de 30 min sous atmosphère oxydante (air : 21% $O_2$ + 79% $N_2$).
- Essai 2 : l'échantillon va subir la même rampe de température jusque 940°C, à raison de 20°C/min, mais sous atmosphère oxydante cette fois ci (air : 21% $O_2$ + 79% $N_2$), puis également un isotherme de 30 min sous atmosphère oxydante (air : 21% $O_2$ + 79% $N_2$).

Ensuite, dans chacun des essais, on va réaliser une réduction de la masse active par une succession de 20 injections de 0,5g de charbon chacune.

Le charbon utilisé pour les essais a les caractéristiques suivantes :

| | |
|---|---|
| Humidité totale | 4,0 % |
| Taux de cendres | 13,3 % |
| Matières volatiles | 28,7 % |
| Carbone fixe | 54,0 % |
| PCS | 26588 kJ/kg |
| PCI | 25677 kJ/kg |
| C | 67,2 % |
| H | 4,0 % |
| O | 8,19 % |
| N | 1,8 % |
| S | 0,8 % |

où :

PCS désigne le pouvoir calorifique supérieur et PCI le pouvoir calorifique inférieur.

Avant injection, ce charbon est préalablement broyé et tamisé à la granulométrie 150-300 microns.

Le réacteur est fluidisé par 150Nl/h d'un mélange gazeux composé de 53% $H_2O$ + 47% $N_2$.

Les gaz à la sortie du réacteur sont d'abord séchés, puis analysés ($CH_4$, CO et $CO_2$ par analyse infrarouge (NDIR), $H_2$ par conductivité thermique et $O_2$ par un analyseur paramagnétique).

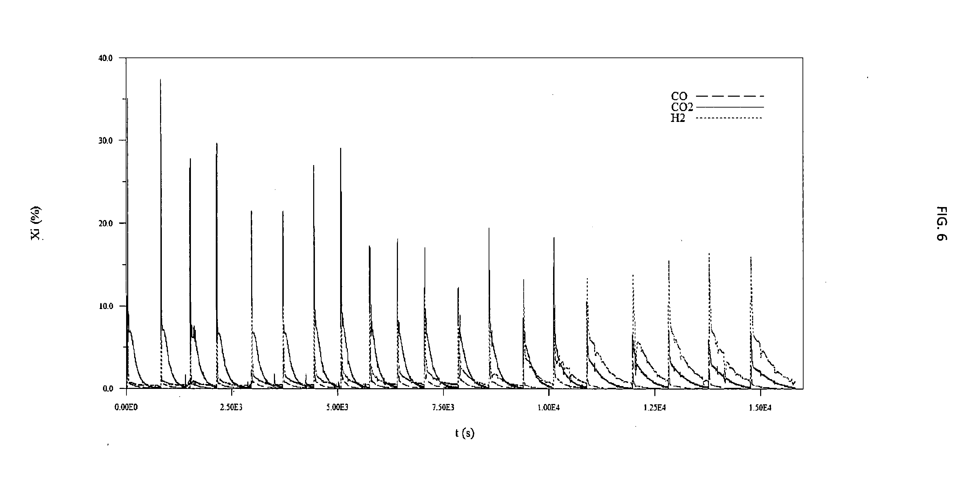

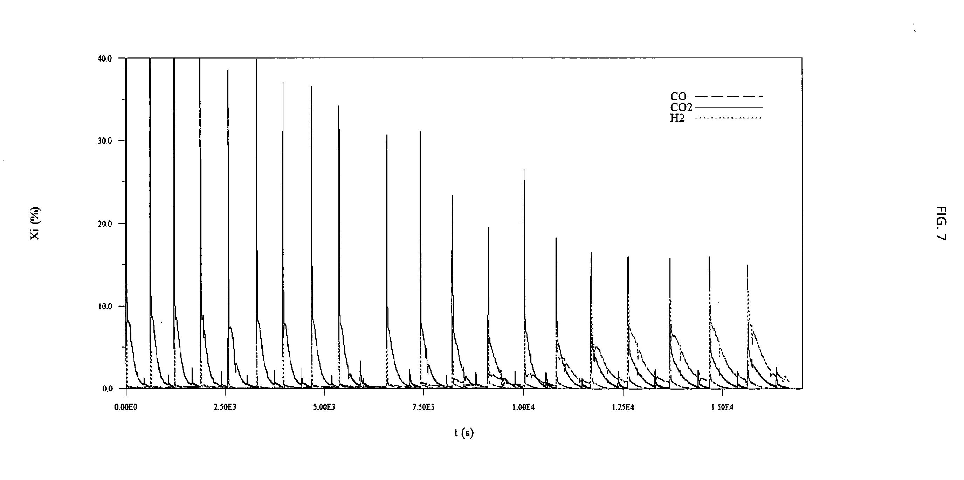

La figure 6 représente l'analyse des gaz pour l'essai 1, alors que la figure 7 représente l'analyse des gaz pour l'essai 2.

A l'aide de ces analyses, on peut calculer le ratio de conversion de carbone en $CO_2$. Soit R= $N_{CO2}/(N_{CO}+N_{CO2})$, où N représente le nombre de moles produites lors des 20 injections. On obtient :

- Dans l'essai 1 : R=84%
- Dans l'essai 2 : R=89%.

On a donc 5% de plus de carbone converti en $CO_2$ dans le cas 2, ou 5% de CO produit en moins, ce qui démontre une oxydation totale plus importante dans le cas 2 et prouve l'effet de la phase d'activation de la masse active à base de pyrolusite pour la combustion de charbon (combustion de charge solide).

### Exemple 3 : Essai comparatif de réactivité de la masse active de type pyrolusite (selon l'invention) par rapport à la référence NiO/NiAl$_2$O$_4$ (comparatif) en présence de charbon

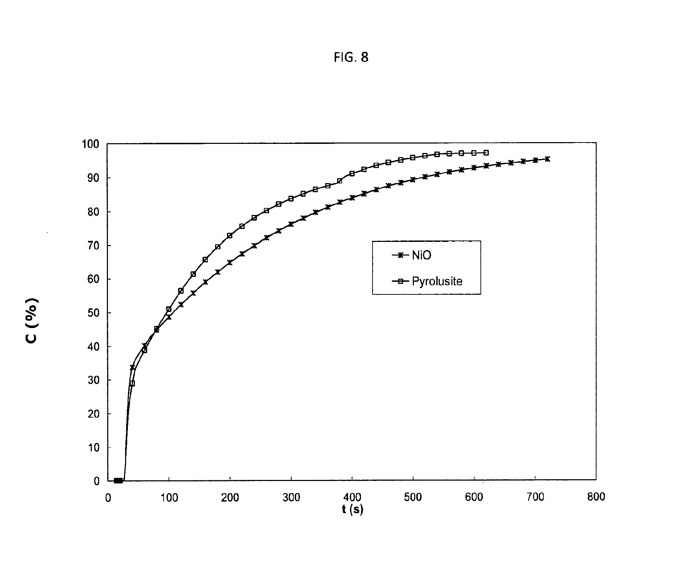

Pour cet exemple, les essais ont été réalisés dans un réacteur en lit fluidisé contenant 400g de masse active.
Dans un premier test on utilise une masse active de référence : NiO/NiAl$_2$O$_4$ (40% pds NiO / 60% pds NiAl$_2$O$_4$), produit par Marion Technologies de granulométrie 100-200 $\mu$m. Ce solide a déjà fait l'objet de nombreuses publications et est reconnu comme un solide ayant des propriétés de réactivité et de capacité de transport d'oxygène de référence pour le procédé de combustion en boucle chimique CLC.
Dans un second test, on utilise de la pyrolusite de même composition que dans l'exemple 1 et préalablement broyée et tamisée à la granulométrie 150-300 $\mu$m.
Dans les deux tests, la montée en température se fait sous atmosphère oxydante (air : 21% 02 + 79% N2) jusque 940°C, puis le solide subit cinq cycles d'oxydo-réduction à l'aide de méthane afin de le stabiliser. Le lit est alors fluidisé par 150 Nl/h d'un mélange gazeux composé de 53% $H_2O$ + 47% $N_2$, et une quantité de 0,25g de charbon de même composition que dans l'exemple 3 est injectée suite à une phase d'oxydation.
Les gaz à la sortie du réacteur sont d'abord séchés, puis analysés (CH$_4$, CO et CO$_2$) par analyse infrarouge (NDIR), H$_2$ par conductivité thermique et O$_2$ par un analyseur paramagnétique.
Par intégration des quantités de CO$_2$ et de CO produits, on peut en déduire le taux de carbone converti. La figure 8 représente la comparaison entre les deux essais. On peut voir que pour atteindre une conversion de plus de 90%, l'essai n°2 met environ 100 secondes de moins que l'essai n°1. La réactivité de la pyrolusite avec du charbon (charge solide) est donc plus importante que la réactivité du solide de référence (NiO/NiAl$_2$O$_4$).

### Exemple 4 : Essai comparatif en présence de combustibles soufrés

Pour cet exemple, les essais ont été réalisés dans un réacteur en lit fluidisé contenant 4kg de masse active NiO/NiAl$_2$O$_4$ pour le premier test (comparatif) et 5,8kg de pyrolusite pour le second test (selon l'invention).
Dans un premier test on utilise une masse active de référence : NiO/NiAl$_2$O$_4$ (40% pds NiO / 60% pds NiAl$_2$O$_4$), produite par Marion Technologies de granulométrie 100-200$\mu$m.
Dans un second test, on utilise de la pyrolusite de même composition que dans l'exemple 1 et préalablement broyée et tamisée à la granulométrie 150-300 microns.
Dans les deux tests, la montée en température se fait sous atmosphère oxydante (air : 21% $O_2$ + 79% $N_2$) jusque 910°C pour le test en présence de NiO/NiAl$_2$O$_4$ et jusque 880°C pour le test avec pyrolusite, puis le solide est ensuite fluidisé à l'aide de 2000Nl/h d'un mélange gazeux de 50% $H_2O$ + 50% $N_2$. Plusieurs cycles d'oxydo-réduction sont ensuite réalisés à l'aide de coke de pétrole de composition : 86,6% C / 4,0% S / 3,7% H / 1,7% O et de granulométrie 200-355 $\mu$m.
Lors de chaque réduction, une quantité de 20g de coke est injectée pour le test avec NiO/NiAl$_2$O$_4$ et 29g de coke est injecté pour le test en présence de pyrolusite.
L'analyse des gaz en sortie de réacteur après passage dans un condenseur permet de mettre en évidence que :

- dans le cas du test avec NiO/NiAl$_2$O$_4$ du $SO_2$ est mesuré à la fois durant l'étape de réduction et durant l'étape d'oxydation - en proportion, cela correspond à une fourchette de 60 à 90% de $SO_2$ émis durant la réduction et 10 à 30% de $SO_2$ émis durant l'étape d'oxydation ; la présence de $SO_2$ durant l'oxydation est probablement liée à la formation de NiS ou de Ni$_3$S$_2$ durant la réduction.
- dans le cas du test en présence de pyrolusite, le $SO_2$ est essentiellement détecté pendant l'étape de réduction - 96 à 100% de $SO_2$ émis pendant la réduction et 0 à 4% de $SO_2$ durant l'oxydation en fonction des tests.

### Exemple 5 : Impact de la présence de vapeur d'eau sur l'agglomération du solide

Pour cet exemple, les essais ont été réalisés dans un réacteur en lit fluidisé contenant 200g de masse active.

Un premier test a été réalisé en présence de vapeur d'eau dans le gaz de fluidisation et un second test sans vapeur d'eau, le débit de vapeur d'eau étant remplacé par un gaz inerte, de l'azote.

Dans les deux tests, on utilise de la pyrolusite de même composition que dans l'exemple 1 et préalablement broyée et tamisée à la granulométrie 150-300 microns.

Dans les deux tests, la montée en température se fait sous atmosphère oxydante à 115Nl/h (air : 21% 02 + 79% N2) jusque 900°C, puis le solide subit cent cycles d'oxydo-réduction à l'aide de méthane (combustible). Entre chaque phase de réduction et d'oxydation le réacteur est fluidisé avec de l'azote afin d'éviter tout contact entre le gaz combustible et l'air.

Durant les étapes de réduction, le lit est fluidisé par 170 Nl/h d'un mélange gazeux composé de 47% $CH_4$ + 29% $N_2$ + 24% $H_2O$ pour le test réalisé en présence de vapeur d'eau, et par 170 Nl/h d'un mélange gazeux composé de 47% $CH_4$ + 53% $N_2$ pour le test réalisé sans vapeur d'eau. Durant les étapes d'oxydation, le lit est fluidisé par 170 Nl/h d'un mélange gazeux composé de 47% air + 29% $N_2$ + 24% $H_2O$ pour le test réalisé en présence de vapeur d'eau, et par 170 Nl/h d'un mélange gazeux composé de 47% air + 53% $N_2$ pour le test réalisé sans vapeur d'eau.

Au moment du déchargement du réacteur après refroidissement à la fin des cent cycles, une différence notable est observée : dans le cas de l'essai en présence de vapeur d'eau durant les phases de réduction et d'oxydation, tout le solide porteur d'oxygène est récupéré sous forme d'une poudre de granulométrie proche de celle introduite initialement ; dans le cas du test sans vapeur d'eau, seulement 46g du solide porteur d'oxygène est récupéré sous forme de poudre, le reste du solide formant un agglomérat dans le réacteur. La présence de vapeur d'eau dans le gaz de fluidisation permet de manière avantageuse de réduire, voire supprimer le phénomène d'agglomération des particules de masse active.

## Revendications

1. Procédé de combustion d'hydrocarbures solides, liquides ou gazeux par oxydo-réduction en boucle chimique utilisant comme masse active d'oxydo-réduction un minerai naturel de manganèse de type pyrolusite comprenant initialement au moins 60% massique de $MnO_2$, sous forme de particules, dans lequel la masse active est activée par une montée progressive en température sous atmosphère oxydante jusqu'à une température supérieure ou égale à 600°C.

2. Procédé selon la revendication 1, dans lequel la montée progressive en température sous atmosphère oxydante est réalisée à une vitesse comprise entre 5°C/h et 100°C/h.

3. Procédé selon la revendication 1 ou la revendication 2, dans lequel la masse active est activée dans l'installation de combustion en boucle chimique.

4. Procédé selon l'une des revendications précédentes, dans lequel la teneur initiale en $MnO_2$ du minerai est comprise entre 70 et 90% massique.

5. Procédé selon la revendication 4 dans lequel la teneur initiale en $MnO_2$ du minerai est comprise entre 76 et 82% massique.

6. Procédé selon l'une des revendications précédentes, dans lequel les particules de masse active sont des fines produites lors de l'extraction et de la production de minerai de qualité métallurgique.

7. Procédé selon l'une des revendications précédentes, dans lequel le minerai est préalablement broyé et tamisé afin d'obtenir une masse active de granulométrie compatible avec une mise en oeuvre en lit fluidisé.

8. Procédé selon la revendication 7, dans lequel la masse active a une granulométrie telle que plus de 90% des particules de masse active ont une taille comprise entre 100 et 500 $\mu$m.

9. Procédé selon la revendication 8, dans lequel la masse active a une granulométrie telle que plus de 90% des particules de masse active ont une taille comprise entre 150 et 300 $\mu$m.

10. Procédé selon la revendication 9, dans lequel la masse active a une granulométrie telle que plus de 95% des particules de masse active ont une taille comprise entre 150 et 300 $\mu$m.

11. Procédé selon l'une des revendications précédentes, dans lequel la masse active est activée par une montée progressive en température jusqu'à une température supérieure ou égale à 800°C.

12. Procédé selon la revendication 11, dans lequel la masse active est activée par une montée progressive en température jusqu'à une température supérieure ou égale à 900°C.

13. Procédé selon l'une des revendications précédentes, dans lequel le débit de circulation de la masse active mesuré à l'entrée de la zone de réduction de la boucle chimique est compris entre 30 et 100 kg/h par kg/h d'oxygène consommé dans la zone de réduction.

14. Procédé selon l'une des revendications précédentes, dans lequel la température de la zone de réduction est comprise entre 600 et 1400°C.

15. Procédé selon l'une des revendications précédentes, dans lequel la réaction de réduction est opérée en présence de vapeur d'eau.

16. Procédé selon l'une des revendications précédentes, dans lequel la combustion est totale.

17. Procédé selon la revendication 16 pour la captation du $CO_2$.

18. Procédé selon l'une des revendications 1 à 15 dans lequel la combustion est partielle.

19. Procédé de production de gaz de synthèse (CO + $H_2$) selon la revendication 18.

20. Utilisation d'un minerai naturel de manganèse de type pyrolusite comprenant au moins 60% massique de $MnO_2$ comme masse active d'oxydo-réduction pour la combustion en boucle chimique d'hydrocarbures solides, liquides ou gazeux.

FIG. 1

FIG. 2

FIG. 3

FIG. 4

FIG. 5

FIG. 6

FIG. 7

FIG. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5447024 A
- GB 2058828 A
- FR 2948177

**Littérature non-brevet citée dans la description**

- **CORBELLA, BEATRIZ M. ; PALACIOS, JOSE MARIA.** Titania-supported iron oxide as oxygen carrier for chemical-looping combustion of methane. *Fuel,* 2006, vol. 86 (1-2), 113-122
- **A. FOSSDAL et al.** Study of inexpensive oxygen carriers for chemical looping combustion. *International Journal of Greenhouse Gas control,* 2011, vol. 5, 483-488